# EUROPÄISCHE PATENTSCHRIFT

(11) **EP 1 435 180 B1**
(45) Veröffentlichungstag und Bekanntmachung des Hinweises auf die Patenterteilung: **02.01.2008**
(21) Anmeldenummer: 02785045.2
(22) Anmeldetag: 02.10.2002
(51) Int. Cl.: H04N 13/00

(54) **AUTOSTEREOSKOPISCHES DISPLAY**
AUTOSTEREOSCOPIC DISPLAY
DISPOSITIF D'AFFICHAGE AUTOSTEREOSCOPIQUE

(30) Priorität: 02.10.2001 DE 10149722
(43) Veröffentlichungstag der Anmeldung: 07.07.2004
(73) Patentinhaber: SeeReal Technologies GmbH, 01307 Dresden (DE)
(72) Erfinder: SCHWERDTNER, Armin, 01259 Dresden (DE)
(86) Internationale Anmeldenummer: PCT/DE2002/003793
(87) Internationale Veröffentlichungsnummer: WO 2003/032647

(56) Entgegenhaltungen:
- WO-A-98/27451
- DE-A- 19 652 689
- DE-A- 19 822 342
- SCHWERDTNER A ET AL: "The Dresden 3D display (D4D)" STEREOSCOPIC DISPLAYS AND VIRTUAL REALITY SYSTEMS V, SAN JOSE, CA, USA, 26-29 JAN. 1998, Bd. 3295, Seiten 203-210, XP002230886 Proceedings of the SPIE - The International Society for Optical Engineering, 1998, SPIE-Int. Soc. Opt. Eng, USA ISSN: 0277-786X

## Beschreibung

Die Erfindung betrifft autostereoskopische Displays, bestehend aus einem Flachdisplay zur Darstellung der beiden Stereobilder, einer Bildtrennungsmaske mit vertikalen periodischen Strukturen zur Kanalisierung der linken und rechten Stereobilder auf das linke und das rechte Auge eines Betrachters und einer Vorrichtung zum horizontalen Verschieben der Bildtrennungsmaske entsprechend der Betrachterposition.

Zur stereoskopischen Darstellung ohne Hilfsmittel sind bereits zweikanalige Verfahren und Anordnungen bekannt, die das linke und das rechte Stereo-Bild auf einem Monitor, vorzugsweise auf einem Flachdisplay, darstellen.

Mit diesen Anordnungen werden die beiden Stereo-Bilder, eines für das linke Auge und eines für das rechte Auge, im weiteren linkes und rechtes Bild genannt, gleichzeitig auf einem Flachdisplay dargestellt, das matrixförmig in Zeilen und Spalten organisiert ist. Zur Kanalisierung des linken Bildes auf das linke Auge und des rechten Bildes auf das rechte Auge werden verschiedene Masken, im weiteren als Bildtrennungsmasken bezeichnet, eingesetzt. Die bekanntesten verwenden streifenförmige Barrieren oder Lentikulare.

Mit streifenförmigen Barrieren als Bildtrennungsmaske wird das linke Bild vom rechten Auge und das rechte Bild vom linken Auge einfach abgeblockt. Bei Verwendung von Lentikularen wird das linke Bild auf das linke Auge und das rechte Bild auf das rechte Auge projiziert.

In der Regel wirken die Bildtrennungsmasken pixelspaltenweise, z.B. sind die ungeradzahligen Pixelspalten nur für das linke Auge und die geradzahligen Pixelspalten nur für das rechte Auge sichtbar. Die Bildtrennungsmasken sind in der Regel periodische Anordnungen von vertikalen Streifen für Barrieren oder Zylinderlinsen für Lentikulare, die in Richtung der Spalten der Flachdisplays ausgerichtet sind. Der Periodizitätsabstand zwischen zwei benachbarten Pixelspalten heißt Pitch.

Befindet sich der Betrachter an der vorgesehenen Position, sieht er die Stereodarstellung ohne Übersprechen. Bewegt sich der Betrachter seitlich, sehen linkes Auge zunehmend Anteile des rechten Bildes und rechtes Auge linke Bildanteile. Anordnungen mit pixelspaltenweiser Trennung der Stereo-Bilder haben den Nachteil, dass der seitliche Toleranzbereich des Betrachters für übersprechfreies Stereo-Sehen sehr gering ist. Außerdem hat der Betrachter für Abstand vom Flachdisplay nur einen kleinen Spielraum.

Da die Pixel in der Regel aus drei nebeneinanderliegenden Farbsubpixeln zusammengesetzt sind, kann man die Bildtrennungsmasken auch subpixelweise organisieren. Es sind Anordnungen bekannt, die die Kanalisierung der linken Bilder auf das linke Auge und die rechten auf das rechte Auge durch subpixelweise organisierte Bildtrennungsmasken durchführen. Das Problem besteht darin, dann die Pixel-Zuordnung nicht mehr aufrechterhalten werden kann. Zum Beispiel wird das grüne Subpixel aus den ungeradzahligen Spalten nicht mehr auf das linke, sondern auf das rechte Auge projiziert.

Das Problem kann durch Umkodierung (Stereoskopic Display Device, 1995, JP 07013119 A) oder durch ein neues Design des Flachdisplays (Flat stereoscopic image display device and its production, 1994, JP 6046461) gelöst werden.

Besonders vorteilhaft ist der Einsatz von Lentikularen als Bildtrennungsmasken, die den seitlichen Toleranzbereich für übersprechfreies Stereo-Sehen erheblich vergrößern, maximal auf den Augenabstand des Betrachters.

Um den übersprechfreien Toleranzbereich weiter zu vergrößern, kann man die Bildtrennungsmasken der Position des Betrachters horizontal nachführen.

Es ist ein Verfahren bekannt, das die pixelweise organisierte Bildtrennungsmaske der Position des Betrachters horizontal nachführt. Je nach seitlichem Betrachterspielraum beträgt die horizontale Verschiebung einige Pixel. In der Regel sind dies mehrere Millimeter.

Weiterhin ist durch die WO 98/27451 A ein subpixelweise organisiertes Farbdisplay bekannt, bei dem eine programmtechnische Verschiebung der Intensitäten von Farbsubpixeln im Anzeigemittel des Displays zum Verbessern der stereoskopischen Bildqualität genutzt wird, sobald sich der Betrachter durch seitliche Bewegung aus der idealen Betrachterposition bewegt. Die Verschiebung erfolgt in Kombination mit einer an sich bekannten seitlichen Verstellung von Displaykomponenten, beispielsweise eines Barrieregitters, proportional zur seitlichen Bewegung des Betrachters.

Nachteilig sind dabei die hohen Anforderungen an die mechanischen Teile, um die Nachführung der pixelweise und der subpixelweise organisierten Bildtrennungsmasken zu realisieren.

Aufgabe der Erfindung ist, den Bereich für die horizontale mechanische Nachführung der Bildtrennungsmaske zu verkürzen, ohne den seitlichen Bewegungsspielraum des Betrachters zu verringern, so dass der mechanische Teil sowohl vereinfacht als auch robuster gestaltet werden kann.

Diese Aufgabe wird mit den im Patentanspruch 1 aufgeführten Merkmalen gelöst.

Das autostereoskopische Display mit einem Flachdisplay, einer Bildtrennungsmaske mit vertikalen periodischen Strukturen und einer Vorrichtung zum horizontalen Verschieben der Bildtrennungsmaske zeichnet sich erfindungsgemäß dadurch aus, dass die Vorrichtung die horizontale Verschiebung einer pixelweise und subpixelweise organisierten Bildtrennungsmaske bei der seitlichen Bewegung eines Betrachters auf eine Breite eines Periodizitätsintervalls der periodischen Strukturen der Bildtrennungsmaske begrenzt, wobei bei Erreichen der Grenze des Periodizitätsintervalls die Bildtrennungsmaske durch die Vorrichtung um ein Periodizitätsintervall zurückgestellt wird. Damit verringert sich die notwendige Bewegungslänge der Bildtrennungsmaske wesentlich. Der mechanische Teil der Vorrichtung zur horizontalen Verschiebung der Bildtrennungsmaske vereinfacht sich und kann gleichzeitig robuster ausgestaltet werden. Der reduzierte kleine Stellweg führt dazu, dass auch bei schnellen Bewegungen des Betrachters eine Nachführung der Bildtrennungsmaske möglich ist.

Erfindungsgemäß ausgebildete autostereoskopische Displays eignen sich zum Beispiel zum Einsatz insbesondere in den Bereichen Medizintechnik, Multimedia und Technik.

Günstige Ausgestaltungen der Bildtrennungsmaske sind in den Weiterbildungen der Patentansprüche 1 bis 6 aufgeführt.

Ein Ausführungsbeispiel der Erfindung ist in den Zeichnungen dargestellt und wird im folgenden näher beschrieben.
Es zeigen:
Fig. 1 eine schematische Darstellung einer bekannten Barriere-Anordnung in einer Draufsicht, wobei sich der Betrachter in der vorbestimmten Position befindet,
Fig. 2 eine schematische Darstellung der Anordnung entsprechend der Darstellung der Fig. 1, wobei sich der Betrachter seitlich bewegt hat und die Bildtrennungsmaske dem Betrachter nachgeführt wurde,
Fig. 3 eine schematische Darstellung eines erfindungsgemäßen autostereoskopischen Displays mit einer Reduzierung der horizontalen Verschiebung der Bildtrennungsmaske auf ein Periodizitätsintervall.

Ein autostereoskopisches Display besteht aus einem Flachdisplay zur Darstellung der beiden Stereobilder, einer Bildtrennungsmaske mit vertikalen periodischen Strukturen zur Kanalisierung der linken und der rechten Stereobilder auf das linke und das rechte Auge eines Betrachters und einer Vorrichtung zum horizontalen Verschieben der Bildtrennungsmaske entsprechend der Betrachterposition.

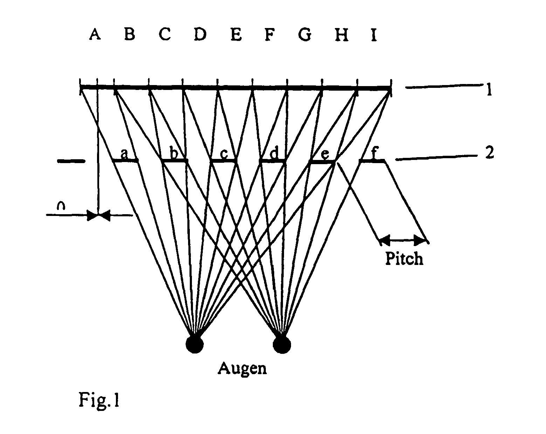

In einer bekannten Anordnung entsprechend der Darstellung in der Fig. 1 enthalten die ungeradzahligen Pixelspalten A, C, E, ... das linke Stereobild und die geradzahligen Pixelspalten B, D, F, ... das rechte Stereobild, eingeschrieben in Flachdisplay 1. Die vertikalen opaquen Streifen a, b, c, ... auf der davor liegenden Bildtrennungsmaske 2 verhindern, dass das linke Auge rechte Bildanteile und das rechte Auge linke Bildanteile sieht. Bei genauer Position des Betrachters gibt es damit kein Übersprechen.

Bewegt sich der Betrachter nach rechts, werden für das rechte Auge zunehmend linke Bildanteile und für das linke Auge rechte Bildanteile sichtbar. Dadurch wird das Stereobild durch pseudoskopische Anteile überlagert, deren Tiefenverhältnisse umgekehrt sind.

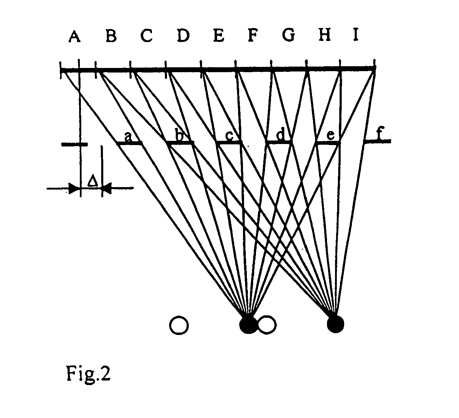

Durch ein bekanntes Nachführen der Bildtrennungsmaske 2 kann das Übersprechen verhindert werden (Darstellung in der Fig. 2). Die Bildtrennungsmaske 2 ist in der Regel so ausgeführt, dass ein Augenabstand einem horizontalen Pixelabstand im Flachdisplay 1 entspricht. Bei einem seitlichen Bewegungsspielraum für den Betrachter von etwa 50 cm müsste die Bildtrennungsmaske 2 um acht Pixel verschoben werden, was bei einem TFT-Diplay von 18" mit SXGA-Auflösung einem Bereich von etwa 2,25 mm entspricht. Bei der dadurch bedingten hohen Genauigkeit der Positionierung der Bildtrennungsmaske 2 sind dazu erhebliche Anforderungen an die mechanische Führung erforderlich.

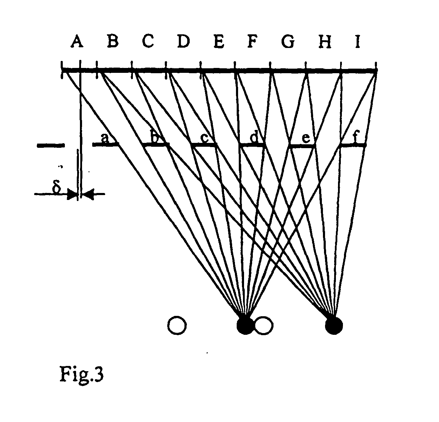

Ein erfindungsgemäßes autostereoskopisches Display mit reduziertem Tracking ist prinzipiell in der Fig. 3 dargestellt, wobei der Bereich der horizontalen Verschiebung reduziert ist. Der Betrachter befindet sich an der gleichen Position wie in der Fig. 2 dargestellt. Unter Ausnutzung der Periodizität der Strukturen der Bildtrennungsmaske 2 wird der Bereich für die horizontale Verschiebung der Bildtrennungsmaske 2 auf die Breite eines Periodizitätsintervalls reduziert. Bei einer seitlichen Bewegung des Betrachters verschiebt die Vorrichtung die Bildtrennungsmaske 2 bis zum Erreichen der Grenze des Periodizitätsintervalls. Danach wird die Bildtrennungsmaske 2 mittels der Vorrichtung um ein Periodizitätsintervall zurückgestellt. Von dieser neuen Position aus beginnt wieder die Verschiebung der Bildtrennungsmaske 2.

Bei dem angenommenen seitlichen Bewegungsspielraum für den Betrachter von etwa 50 cm reduziert sich die horizontale Verschiebung bei einem TFT-Display von 18" mit SXGA-Auflösung auf< 0,6 mm.

Noch deutlicher ist die mögliche Reduzierung der Verschiebung der Bildtrennungsmaske 2 bei der subpixelweise organisierten Bildtrennungsmaske 2. Hier hat der Pitch eine Breite von< 0,2 mm.

Die Bildtrennungsmaske 2 aus opaquen Streifen besteht aus abwechselnd transparenten und nichttransparenten vertikalen Streifen, deren Breiten einheitlich sind und nicht größer als eine Pixelbreite sind. Das Periodizitätsintervall ist etwa zwei Pixel breit. Bei der subpixelweisen Ansteuerung sind die Streifen entsprechend ein Subpixel breit, das Periodizitätsintervall reduziert sich damit in der Regel auf 1/3.

Statt der opaquen Streifen können in weiteren Ausführungsformen der Bildtrennungsmaske 2 auch Prismen oder Linsen zum Einsatz kommen, wobei deren Abstände, das Periodizitätsintervall, etwa der doppelten Pixel- oder Subpixelbreite entspricht. Bei den Bildtrennungsmasken 2 mit Prismen sorgen die beiden Prismentlanken dafür, dass darunter liegende Pixelspalten durch die doppelt so breiten Prismen alternativ auf das linke Auge und das rechte Auge projiziert werden. Die Funktion einer Lentikularmaske als Bildtrennungsmaske 2 in einer weiteren Ausführungsform ist ähnlich. Dabei wird jeweils ein schmaler Streifen aus alternierenden Pixel- oder Subpixelspalten auf das linke Auge oder das rechte Auge projiziert.

Vorrichtungen zum horizontalen Verschieben einer Bildtrennungsmaske 2 sind bekannt. Das kann zum Beispiel ein bekannter Schrittmotor sein, dessen rotatorische Bewegung des Läufers mittels eines daran gekoppelten Getriebes und/oder eines Gelenks und/oder Exzenters in eine translatorische Bewegung hoher Präzision gewandelt wird. Der Schrittmotor ist dabei prinzipiell ein mehrphasiger elektrischer Synchronmotor, der mittels elektronischer Schaltungen im Impulsbetrieb gespeist wird. Bei Fortschreiten der Ansteuerung um einen Schritt führt dieser eine Drehung um den Schrittwinkel aus. Der Schrittmotor arbeitet permanenterregt oder ist ein Hybridmotor. Hybridmotore sind permanenterregt und arbeiten nach dem Reluktanzprinzip. In einer weiteren Ausführungsform kann ein bekannter translatorischer Antrieb eingesetzt werden.

## Patentansprüche

1. Autostereoskopisches Display mit einem Flachdisplay zur Darstellung eines linken und rechten Stereobildes, einer Bildtrennungsmaske mit vertikalen periodischen Strukturen zur Kanalisierung des linken und rechten Stereobildes auf das linke und rechte Auge eines Betrachters, wobei die periodischen Strukturen ein Periodizitätsintervall aufweisen, und mit einer Vorrichtung zum horizontalen Verschieben der Bildtrennungsmaske entsprechend der Betrachterposition, **dadurch gekennzeichnet, dass** die Vorrichtung die Bildtrennungsmaske (2) innerhalb einer Breite, die dem Periodizitätsintervall der periodischen Strukturen entspricht, horizontal verschiebt und die Bildtrennungsmaske (2) bei Erreichen der Periodizitätsgrenze der periodischen Strukturen um ein Periodizitätsintervall zurückstellt.

2. Autostereoskopisches Display nach Anspruch 1, **dadurch gekennzeichnet, dass** die Bildtrennungsmaske (2) opaque streifenförmige Bereiche als Barriere aufweist.

3. Autostereoskopisches Display nach Anspruch 1, **dadurch gekennzeichnet, dass** die Bildtrennungsmaske (2) aus streifenförmigen Prismen besteht.

4. Autostereoskopisches Display nach Anspruch 1, **dadurch gekennzeichnet, dass** die Bildtrennungsmaske (2) ein Lentikular mit Zylinderlinsen ist.

5. Autostereoskopisches Display nach einem der Ansprüche 1 bis 4, **dadurch gekennzeichnet, dass** die Bildtrennungsmaske (2) pixelspaltenweise organisiert ist.

6. Autostereoskopisches Display nach einem der Ansprüche 1 bis 4, **dadurch gekennzeichnet, dass** die Bildtrennungsmaske (2) subpixelweise organisiert ist.

## Claims

1. Autostereoscopic display with a flat display panel for representing a left and a right stereo image, an image separating mask having vertical periodic structures for channelling the left and right stereo images onto the left and right eye of an observer, whereby the periodic structures exhibit a periodicity interval, and with a device for horizontally displacing the image separating mask in accordance with a position of an observer, **characterised in that** the device displaces the image separating mask (2) horizontally within a width corresponding to the periodicity interval of the periodic structures and said device returns the image separating mask (2) by one periodicity interval when the limit of the periodicity interval is reached.

2. Autostereoscopic display according to claim 1, **characterised in that** the image separating mask (2) comprises stripe-shaped opaque regions which serve as a barrier.

3. Autostereoscopic display according to claim 1, **characterised in that** the image separating mask (2) comprises stripe-shaped prisms.

4. Autostereoscopic display according to claim 1, **characterised in that** the image separating mask (2) is a lenticular with cylindrical lenses.

5. Autostereoscopic display according to one of claims 1 to 4, **characterised in that** the image separating mask (2) is organised pixel-column-wise.

6. Autostereoscopic display according to one of claims 1 to 4, **characterised in that** the image separating mask (2) is organised subpixel-column-wise.

## Revendications

1. Écran autostéréoscopique avec un écran plat pour la représentation d'une image stéréoscopique gauche et droite, un masque de séparation d'image avec des structures périodiques verticales pour canaliser l'image stéréoscopique gauche et droite sur l'oeil gauche et l'oeil droit d'un observateur, dans lequel les structures périodiques comportent un intervalle de périodicité, et avec un dispositif pour le déplacement horizontal du masque de séparation d'image conformément à la position de l'observateur, **caractérisé en ce que** le dispositif déplace horizontalement le masque de séparation d'image (2) à l'intérieur d'une largeur qui correspond à l'intervalle de périodicité des structures périodiques, et remet le masque de séparation d'image (2) dans une position en retour d'un intervalle de périodicité lorsque la limite de périodicité des structures périodiques est atteinte.

2. Écran autostéréoscopique selon la revendication 1, **caractérisé en ce que** le masque de séparation d'image (2) comporte des zones opaques en forme de bandes en tant que barrière.

3. Écran autostéréoscopique selon la revendication 1, **caractérisé en ce que** le masque de séparation d'image (2) est formé de prismes en forme de bandes.

4. Écran autostéréoscopique selon la revendication 1, **caractérisé en ce que** le masque de séparation d'image (2) est une structure lenticulaire avec des lentilles cylindriques.

5. Écran autostéréoscopique selon l'une quelconque des revendications 1 à 4, **caractérisé en ce que** le masque de séparation d'image (2) est organisé en colonnes de pixels.

6. Écran autostéréoscopique selon l'une quelconque des revendications 1 à 4, **caractérisé en ce que** le masque de séparation d'image (2) est organisé en subpixels.
